# EUROPEAN PATENT SPECIFICATION

(11) **EP 2 978 572 B1**
(45) Date of publication and mention of the grant of the patent: **30.05.2018**
(21) Application number: 13713163.7
(22) Date of filing: 27.03.2013
(51) Int. Cl.: B27B 33/14, B23D 65/00

(54) **CHAIN SAW**
KETTENSÄGE
SCIE À CHAINE

(43) Date of publication of application: 03.02.2016
(73) Proprietor: Husqvarna AB, 561 82 Huskvarna (SE)
(72) Inventor: LIKIDOU, Panagiota, S-554 54 Jönköping (SE)
(86) International application number: PCT/EP2013/056591
(87) International publication number: WO 2014/154268

(56) References cited:
- WO-A1-2008/041263
- WO-A2-2008/008900
- DE-A1- 3 207 326
- US-A- 4 434 556
- US-A- 4 934 052
- US-A1- 2003 051 351
- US-A1- 2008 034 938
- US-A1- 2011 179 652
- US-A1- 2012 005 901

## Description

The invention relates to the field of chain saws and in particular to chain saws comprising an endless saw chain and a saw bar with a peripheral track for the saw chain according to the preamble of claim 1. Such a chain saw is known from US2008/0034938A1. Saw chains and saw bar assemblies for chain saws are subjected to high mechanical loads during operation. The friction of the individual movable parts against each other causes wear. Generally, such saw chain and saw bar assembly includes essentially a saw bar having a peripheral track for the saw chain, the saw bar in particular having a guiding groove formed along the outer longitudinal edge thereof in which the saw chain runs. The saw chain comprises a plurality of chain links and/or chain link components, in particular including cutter links, drive links and/or tie straps. It is also known that the drive links have respective rakers or tangs which are guided in the guiding groove. With the chain saw in operation the pivotally connected chain links or chain link components rub against each other in particular in the region of their pivot connections. Friction forces occur in the region of the peripheral track of the saw bar and the sliding surfaces of the individual chain link which slide on this peripheral track. In case of a guide bar having a guiding groove friction forces also occur in the region of the guiding groove between the side walls of the stationary fixed guiding groove and the side surfaces of the running chain links.
In order to reduce friction forces and the related signs of wear lubrication devices are known for lubricating the existing friction and rubbing pairs wherein a lubricant, in particular a lubrication oil, is introduced into the guiding groove where it is taken up by the drive links, in particular by the rakers or tangs thereof. With the running saw chain and the centrifugal forces caused by its circular movement the lubricant is driven also to medium and outer portions of the chain links, in particular also to their pivot connections.

Aforementioned centrifugal forces, however, also cause the lubricant being driven to the outer regions of the chain links and being thrown off too rapidly with the effect of an insufficient lubrication. As a remedial measure, DE 32 07 326 A1 discloses an arrangement on a chain saw for lubricating the saw chain, which comprises groove-like oil guides arranged at the inner surfaces of saw chain tie straps and preferably also on saw chain cutter links. As a result, the groove-like oil guides serve as a reservoir for lubrication oil and the pivot connections and in particular connecting pins connecting two adjacent chain links can be supplied with the lubrication oil.

Also the website http://www.oregonproducts.com/pro/products/fb/lubrilink lubriwell.htm of OREGON®, Blount Inc., 2012, discloses a saw chain tie strap having a cavity arranged between two rivet bores that acts as a reservoir, preventing oil from being thrown off the chain by centrifugal force.

In United States patent application US 2008/0034938 A1 a connecting link for a saw chain of a motor-driven chain saw is described which connecting link is pivotally connected to drive links and a cutting link via rivet bolts. Rivet openings are arranged at both the cutting links and the drive links and cutting links for insertion of the rivet bolts. In order to perform a lubrication of the saw chain during its movement, a lubrication channel is arranged at each of the drive links in an inclined arrangement from a bottom portion to the rivet openings. Constant conveyance of lubricant is necessary in order to secure permanent lubrication.

It is an object of the present invention to further improve lubrication of the saw chain, in particular pivot connections thereof, thereby also reducing the tendency of the chain links to flex during operation. Another object of the invention is to provide information to the user of the chain saw related to the saw chain or the assembly or operation thereof.

A chain saw according to the invention comprises an endless saw chain having a plurality of chain links and/or chain link components and a saw bar having a peripheral track for the saw chain. The plurality of chain links and/or chain link components comprise at least one tie strap having a cavity or notch arranged at a first lateral surface thereof for lubrication of the chain saw. The first lateral surface of the tie strap faces a lateral surface of at least one adjacent chain link or chain link component. The cavity or notch is manufactured during a deforming process and serves as a reservoir for a lubricant, in particular lubrication oil. With such reservoir lubricant can be kept for a while and gradually fed to surfaces that are in a sliding movement against each other while the saw chain is moving. When manufacturing the cavity or notch by using a deforming process the material of the tie strap, thus the tie strap itself, is obtaining an increased stiffness, and yet reducing the tendency of the saw chain to flex during its rotational movement. The cavity or notch is further characterized by an extension essentially in the driving direction of the saw chain and by a dilatation, an extension and/or branching essentially in lateral direction, i.e. in the direction perpendicular to the driving direction. Having extensions in two directions, the cavity or notch is able to collect sufficient lubricant for the lubrication of the chain saw, and further, due to the above-mentioned manufacturing process, the stiffness, in particular the torsion stiffness, is further increased. The invention further provides a cavity or notch, or at least a portion thereof, which comprises a symbol, such symbol providing information to a user of the chain saw. The information providing of the symbol may be of any kind of message that might be helpful for the user to get an indication of the whole product or any specific component thereof, e.g. the name or a mark, logo or code of the producer of the chain saw or of the fitted saw chain. Alternatively, the user might get also information of the use of the product or component or its arrangement on the chain saw. The symbol is of triangular shape and a first corner thereof terminates at a rivet bore arranged at the tie strap. Thus, the lubricant in the triangular cavity is stored in contact with a pivoting connection of the tie strap with an adjacent chain link or chain link component and the lubricant can be gradually delivered to the pivoting connection.

Different structures for the cavity or notch with its extensions in two directions are conceivable. The cavity or notch may have a large-scale dilatation in the direction perpendicular to the driving direction. In case of an only partly extension, dilatation and/or branching the cavity or notch may be T-, L- or cross-shaped.

The deforming process may be of any kind of manufacturing process which brings material strength about, what may be coining, punching, embossing, bead forming, rolling and/or stamping. Such kind of deforming process is also very cheap and can be quickly executed.

The deforming process may also be executed in a way resulting in not only arranging the cavity or notch on the first lateral surface which is directly exposed to that manufacturing step, but in also receiving a respective marking, i. e. an embossment or elevation, on a second lateral surface opposite to the first lateral surface, which embossment or elevation may be essentially of the same shape as the cavity or notch. When having an uneven surface on both sides the stiffness of tie strap is yet further increased.

The tie strap may also comprise two rivet bores for its connection with adjacent chain links or chain link components and the cavity or notch may be arranged in the area between the rivet bores. In this way the tie strap is reinforced mainly in its central sector where the tendency of torsion is usually notably high.

In a preferred embodiment, the user gets an indication of the driving direction of the saw chain. This may be received by the triangular symbol. A first corner or cone end of such a symbol may indicate the driving direction or direction of rotation of the saw chain. In case of a replacement of the respective chain link or chain link component, i.e. of the tie strap, or of the whole saw chain the user will be informed in that way how to fit this part into the saw chain or the saw chain into the chain saw.

Preferably, the cavity or notch further comprises a straight line channel. Such straight line channel may terminate with a first end thereof at or close by a second rivet bore arranged at the tie strap, particularly disposed at a distance from the first rivet bore. In order to provide a contiguous cavity or notch at the tie strap, the straight line channel may terminate with its second end at the triangular symbol, particularly opposite to the first corner or cone end thereof. That way, the connected channel and triangular symbol form a continuous arrow-shaped cavity or notch.

In a most preferred embodiment, the straight line channel terminates with its second end at a second corner of the triangular symbol, which second corner may form - at least approximately - a right angle. Such a combination of channel and triangular symbol forms an axially divided arrow with a continuous longitudinal extension from the first end of the channel to the cone end of the arrowhead. This shape of symbol indicating the direction of saw chain rotation makes best possible use of the area between the two rivet bores, thereby providing to a large extent an evenly distributed lubricant and further providing a tie strap with a notably high torsional stiffness.

The invention will be described more fully hereinafter with reference to the accompanying drawings, in which
- Fig. 1: is a schematic view of a chain saw with a part of a housing cut out;
- Fig. 2: is an enlarged cross-sectional view of a cutting assembly of Fig. 1;
- Fig. 3: is a side elevation view of a segment of a saw chain;
- Fig. 4: is a perspective view of the segment of the chain saw of Fig. 3, but arranged on a saw bar;
- Figs. 5a to 5d: are side elevation and perspective views of the inner side and the outer side of tie straps as used in the saw chain of Fig. 3.

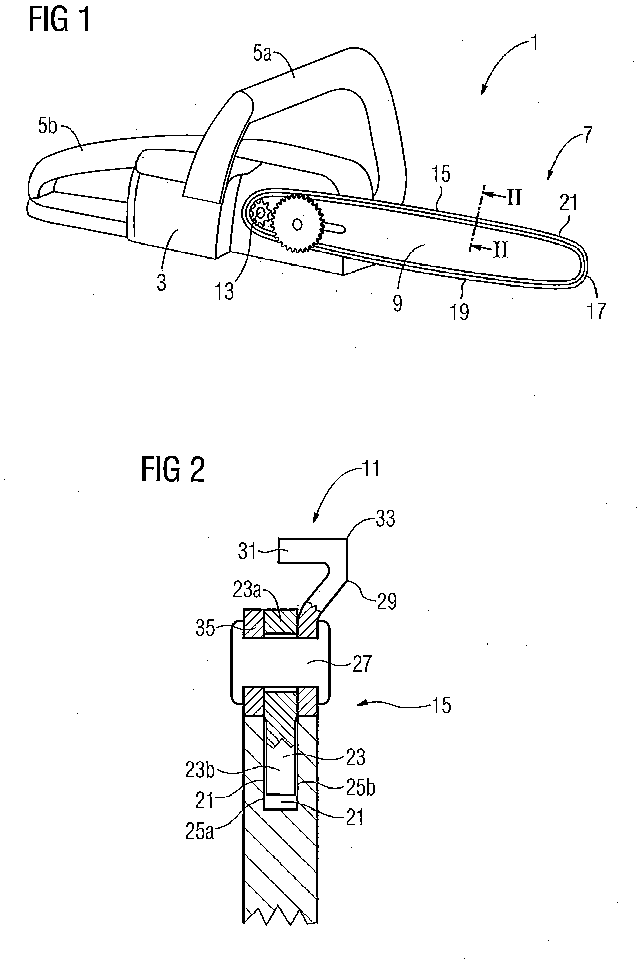

Fig. 1 shows a schematic view of a chain saw 1 with a housing 3 in which a driving motor (not shown) is mounted. For guiding the chain saw 1 two handles 5a, 5b are attached to the housing 3. On one end of the housing 3, opposite to a rearward handle 5b, the chain saw 1 has a cutting assembly 7 which includes a saw bar 9 and a saw chain 11. In the housing 3 a drive sprocket 13 is provided for driving the saw chain 11. The drive sprocket 13 is driven by the driving motor. The saw chain 11 runs over the drive sprocket 13 and over upper, end and lower edges 15, 17, 19 of the saw bar 9.

Fig. 2 shows, in an enlarged and more detailed view, a cross section taken through the cutting assembly 7 of Fig. 1 according to intersection line II-II. In the embodiment shown, the saw bar 9 has a guiding groove 21 in the region of its peripheral edges 15, 17, 19. A drive link 23 is shown in cross section and comprises an upper portion 23a and a lower portion 23b. The upper portion 23a is arranged outside of the guiding groove 21 and the lower portion 23b is arranged inside the guiding groove 21 and is guided during its movement by the inner walls 25a, 25b of the guiding groove 21.

The drive link 23 is pivotally connected via a rivet 27 to a cutting link 29 which comprises a cutting tooth 31 with a cutting tip 33 and which is arranged at a first side of the upper portion 23a of the drive link 23. The cutting link 29 is completed by a tie strap 35 which is arranged at a second side of the upper portion 23a of the drive link 23 opposite to the first side.

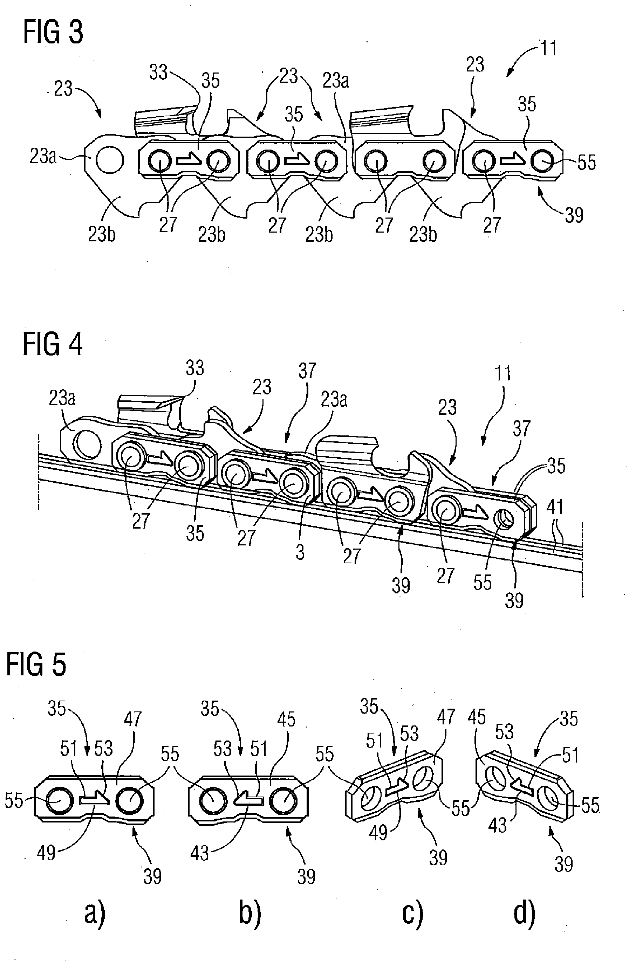

Fig. 3 shows, in a side view, a segment of a saw chain 11 with a number of drive links 23 that is pivotally connected by a rivet 27 alternately to a pair of cutting link 29 / tie strap 35 and a pair of both-sided tie straps 35 constituting a connecting link 37. The cutting links 29 are alternatingly arranged so that their respective cutting tips 33 are alternately on both sides of a longitudinal section plane of the saw chain 11. As can be easily understood, the segment shown in Fig. 3 is of periodic way. On each side of the series of drive links 23 of the chain saw 11, a cutting link 29 is followed by three tie straps 35.

Fig. 4 shows the saw chain segment of Fig. 3, however, inserted in the guiding groove 21 of the saw bar 9. Both cutting links 29 and tie straps 35 are each equipped with a bottom-sided sliding surface 39 for sliding on the rails 41 of the guiding groove 21.

In order to minimize wear during the movement of the saw chain 11 oil lubrication is provided. With the movement the individual parts of the cutting assembly 7 execute sliding or rubbing movements against each other for which lubricant is conducted into the guiding groove 21 for the lubrication of the individual parts. Rubbing pairs, in particular, are formed between tie straps 35 and drive links 23 in the region of their pivotal connection or between the rivets 27 and the inner surfaces of the bores of the drive link 23. Sufficient lubrication of such rubbing pairs is important for longevity of the chain saw 11.

During the rotational movement of the saw chain 11 the lubricant is taken up by the lower portions 23b of the drive links 23 and, due to centrifugal force while moving in particular along the end edge 17 of the saw bar 9, slipped to the upper portions 23a, thereby moved also into the gaps between drive links 23 and cutting links 29 or tie straps 35, respectively. In order to avoid immediate further catapulting of all the lubricant to the outside each of the tie straps 35 comprise a cavity 43 that acts as a reservoir for lubrication oil, preventing oil from being thrown off the saw chain 11 by centrifugal force.

As can be best understood from the disclosure of Figs. 5a to 5d showing the inner 45 and outer 47 sides of a tie strap 35, the cavity 43 is implemented during a deforming process which could be one of the processes coining, punching, embossing, bead forming, rolling or stamping. Such a kind of deforming process results not only in receiving a cavity 43 on the inner side 45 (Figs. 5b, 5d) but also in receiving a respective embossment 49 on the outer side 47 (Figs. 5a, 5c) of the tie strap 35. The cavity 43 and also the related embossment 49 are shaped as a longitudinally halved arrow with a horizontally arranged arrow shaft 51 and an adjacent halved arrowhead 53 which, when fitted in the saw chain 11, is directed away from the guiding groove 21 of the saw bar 9.

The arrangement is realized in that the halved arrow 51, 53 indicates the direction of rotation of the saw chain 11. By reason of having tie straps 35 arranged on both sides of the saw chain 11, pairs of mirror-inverted tie straps 35 need to be provided for a respective correct indication of the direction of rotation. The halved arrow 51, 53 is arranged between two bores 55 provided for connecting the tie strap 35 with the adjacent drive links 23 by rivets 27, however, the longitudinal extension of the halved arrow 51, 53 is smaller than the distance between the two bores 55.

The depth of the cavity 43 may be within the range of 0.025 to 0.4 mm, preferably in the range of 0.1 to 0.2 mm, wherein for an equal quantity distribution of the lubricant the depth of the arrow shaft 51 may be greater than the depth of the arrowhead 53. However, in the embodiment shown in Figs. 1 to 5 the cavity 43 is of a uniform depth.

### List of reference numerals

- 1: chain saw
- 3: housing
- 5a, 5b: handles
- 7: cutting assembly
- 9: saw bar
- 11: saw chain
- 13: drive sprocket
- 15: upper edge
- 17: end edge
- 19: lower edge
- 21: guiding groove
- 23: drive link
- 23a, 23b: upper, lower portion of drive link
- 25a, 25b: inner walls of guiding groove
- 27: rivet
- 29: cutting link
- 31: cutting tooth
- 33: cutting tip
- 35: tie strap
- 37: connecting link
- 39: sliding surface
- 41: rails
- 43: cavity
- 45: tie strap inner side
- 47: tie strap outer side
- 49: embossment
- 51: arrow shaft
- 53: arrowhead
- 55: bore

## Claims

1. A chain saw (1) comprising an endless saw chain (11) and a saw bar (9) with a peripheral track for the saw chain (11), the saw chain (11) having a plurality of chain links and/or chain link components which comprise at least one tie strap (35) having a cavity (43) or notch arranged at a first lateral surface (45) thereof, the first lateral surface (45) facing a lateral surface of at least one adjacent chain link or chain link component, wherein the cavity (43) or notch
- is manufactured during a deforming process;
- comprises an extension essentially in the driving direction of the saw chain (11) and, at least in part, a dilatation, an extension and/or a branching essentially extending in the direction perpendicular thereto, wherein the cavity (43) or notch serves as a reservoir for a lubricant, in particular for oil, for lubrication of the saw chain (11), wherein at least a portion of the cavity (43) or notch comprises a symbol thereby providing information to a user of the chain saw (1) which symbol is triangular, **characterized in that**
a first corner of the triangular symbol terminates at a rivet bore (55) arranged at the tie strap (35).

2. The chain saw (1) of claim 1, wherein the cavity (43) or notch is essentially T-, L- or cross-shaped.

3. The chain saw (1) of claim 1 or 2, wherein the cavity (43) or notch is manufactured during a coining, punching, embossing, bead forming, rolling and/or stamping process.

4. The chain saw (1) of any of the claims 1 to 3, wherein during the deforming process an embossment (49) is being assembled on a second lateral surface (47), opposite to the first lateral surface (45).

5. The chain saw (1) of claim 4, wherein the embossment (49) is essentially of the same shape as the cavity (43) or notch.

6. The chain saw (1) of any of the claims 1 to 5, wherein the tie strap (35) comprises two rivet bores (55) for its connection with adjacent chain links (23, 29) or chain link components and wherein the cavity (43) or notch is arranged in the area between the rivet bores (55).

7. The chain saw (1) of any of the claims 1 to 6, wherein the symbol indicates the driving direction of the saw chain (11).

8. The chain saw (1) of any of claims 1 to 7, wherein the cavity (43) or notch further comprises a straight line channel (51).

9. The chain saw (1) of claim 8, wherein the channel (51) terminates with its first end at or close by a rivet bore (55) arranged at the tie strap (35).

10. The chain saw (1) of claim 9, wherein the channel (51) terminates with its second end at the triangular symbol, thereby forming a continuous arrow-shaped cavity (43) or notch.

11. The chain saw (1) of claim 10, wherein the channel (51) terminates with its second end at a second corner of the triangular symbol, the second corner forming at least approximately a right angle, thereby forming all in all an axially divided arrow with a continuous longitudinal extension from the first end of the channel (51) to the cone end of the arrowhead (53).

12. A saw chain (11) for the chain saw (1) according to any of claims 1 to 11.

## Patentansprüche

1. Kettensäge (1), umfassend eine endlose Sägekette (11) und ein Sägeschwert (9) mit einer am Umfang angeordneten Laufbahn für die Sägekette (11), wobei die Sägekette (11) eine Vielzahl von Kettengliedern und/oder Kettengliedbauteilen aufweist, die mindestens eine Zuglasche (35) mit einem Hohlraum (43) oder einer Einkerbung umfassen, der/die in einer ersten Seitenfläche (45) davon angeordnet ist, wobei die erste Seitenfläche (45) einer Seitenfläche mindestens eines benachbarten Kettengliedes oder Kettengliedbauteils zugewandt ist, wobei der Hohlraum (43) oder die Einkerbung
- bei einem Umformprozess hergestellt ist;
- eine Verlängerung im Wesentlichen in der Bewegungsrichtung der Sägekette (11) und, zumindest teilweise, eine Erweiterung, eine Verlängerung und/oder eine Verzweigung, die sich im Wesentlichen in der Richtung senkrecht dazu erstreckt, aufweist,
wobei
der Hohlraum (43) oder die Einkerbung als Reservoir für einen Schmierstoff, insbesondere für Öl, zum Schmieren der Sägekette (11) dient, wobei mindestens ein Abschnitt des Hohlraums (43) oder der Einkerbung ein Symbol umfasst, damit für einen Benutzer der Kettensäge (1) Informationen bereitgestellt werden, wobei das Symbol dreieckig ist,
**dadurch gekennzeichnet, dass**
eine erste Ecke des dreieckigen Symbols an einem in der Zuglasche (35) angeordneten Nietloch (55) endet.

2. Kettensäge (1) nach Anspruch 1, wobei der Hohlraum (43) oder die Einkerbung im Wesentlichen T-, L- oder kreuzförmig ist.

3. Kettensäge (1) nach Anspruch 1 oder 2, wobei der Hohlraum (43) oder die Einkerbung bei einem Präge- , Stanz-, Hohlpräge-, Sickenformungs-, Walz- und/oder Formstanzprozess hergestellt wird.

4. Kettensäge (1) nach einem der Ansprüche 1 bis 3, wobei während des Umformprozesses an einer zweiten Seitenfläche (47), gegenüber der ersten Seitenfläche (45), eine Erhebung (49) gebildet wird.

5. Kettensäge (1) nach Anspruch 4, wobei die Erhebung (49) im Wesentlichen von gleicher Form wie der Hohlraum (43) oder die Einkerbung ist.

6. Kettensäge (1) nach einem der Ansprüche 1 bis 5, wobei die Zuglasche (35) zwei Nietlöcher (55) für ihre Verbindung mit benachbarten Kettengliedern (23, 29) oder Kettengliedbauteilen umfasst und wobei der Hohlraum (43) oder die Einkerbung in dem Bereich zwischen den Nietlöchern (55) angeordnet ist.

7. Kettensäge (1) nach einem der Ansprüche 1 bis 6, wobei das Symbol die Bewegungsrichtung der Sägekette (11) angibt.

8. Kettensäge (1) nach einem der Ansprüche 1 bis 7, wobei der Hohlraum (43) oder die Einkerbung ferner einen geradlinigen Kanal (51) umfasst.

9. Kettensäge (1) nach Anspruch 8, wobei der Kanal (51) mit seinem ersten Ende an oder nahe einem in der Zuglasche (35) angeordneten Nietloch (55) endet.

10. Kettensäge (1) nach Anspruch 9, wobei der Kanal (51) mit seinem zweiten Ende an dem dreieckigen Symbol endet und dadurch einen ununterbrochenen pfeilförmigen Hohlraum (43) oder eine ununterbrochene pfeilförmige Einkerbung bildet.

11. Kettensäge (1) nach Anspruch 10, wobei der Kanal (51) mit seinem zweiten Ende an einer zweiten Ecke des dreieckigen Symbols endet, die zweite Ecke zumindest ungefähr einen rechten Winkel bildet und dadurch alles in allem ein axial geteilter Pfeil mit einer ununterbrochenen Längserstreckung vom ersten Ende des Kanals (51) bis zum spitzen Ende der Pfeilspitze (53) gebildet wird.

12. Sägekette (11) für die Kettensäge (1) nach einem der Ansprüche 1 bis 11.

## Revendications

1. Scie à chaîne (1) comprenant une chaîne de scie sans fin (11) et une barre de scie (9) avec un chemin périphérique pour la chaîne de scie (11), la chaîne de scie (11) ayant une pluralité de maillons de chaîne et/ou de composants de maillons de chaîne qui comprennent au moins une courroie d'attache (35) ayant une cavité (43) ou une encoche agencée au niveau d'une première surface latérale (45) de celle-ci, la première surface latérale (45) faisant face à une surface latérale d'au moins un maillon de chaîne ou un composant de maillon de chaîne adjacent,
dans laquelle la cavité (43) ou l'encoche
- est fabriquée pendant un procédé de déformation ;
- comprend une extension essentiellement dans la direction d'entraînement de la chaîne de scie (11) et, au moins en partie, une dilatation, une extension et/ou une ramification s'étendant essentiellement dans la direction perpendiculaire à celle-ci, dans laquelle
la cavité (43) ou l'encoche sert de réservoir pour un lubrifiant, en particulier pour une huile, pour la lubrification de la chaîne de scie (11),
dans laquelle au moins une partie de la cavité (43) ou de l'encoche comprend un symbole fournissant ainsi des informations à un utilisateur de la scie à chaîne (1), lequel symbole est triangulaire,
**caractérisée en ce que**
un premier coin du symbole triangulaire se termine au niveau d'un trou de rivet (55) agencé au niveau de la courroie d'attache (35).

2. Scie à chaîne (1) de la revendication 1, dans laquelle la cavité (43) ou l'encoche est essentiellement en forme de T, de L ou de croix.

3. Scie à chaîne (1) de la revendication 1 ou 2, dans laquelle la cavité (43) ou l'encoche est fabriquée pendant un procédé de frappe, de poinçonnage, de gaufrage, de formation de perles, de laminage et/ou d'estampage.

4. Scie à chaîne (1) de l'une des revendications 1 à 3, dans laquelle, pendant le procédé de déformation, un bossage (49) est assemblé sur une deuxième surface latérale (47), opposée à la première surface latérale (45).

5. Scie à chaîne (1) de la revendication 4, dans laquelle le bossage (49) a essentiellement la même forme que la cavité (43) ou l'encoche.

6. Scie à chaîne (1) de l'une des revendications 1 à 5, dans laquelle la courroie d'attache (35) comprend deux trous de rivet (55) pour sa liaison avec des maillons de chaîne (23, 29) ou des composants de maillons de chaîne adjacents et dans laquelle la cavité (43) ou l'encoche est agencée dans la zone entre les trous de rivet (55).

7. Scie à chaîne (1) de l'une des revendications 1 à 6, dans laquelle le symbole indique la direction d'entraînement de la chaîne de scie (11).

8. Scie à chaîne (1) de l'une des revendications 1 à 7, dans laquelle la cavité (43) ou l'encoche comprend en outre un canal rectiligne (51).

9. Scie à chaîne (1) de la revendication 8, dans laquelle le canal (51) se termine par sa première extrémité au niveau ou à côté d'un trou de rivet (55) agencé au niveau de la courroie d'attache (35).

10. Scie à chaîne (1) de la revendication 9, dans laquelle le canal (51) se termine par sa deuxième extrémité au niveau du symbole triangulaire, formant ainsi une cavité (43) ou une encoche en forme de flèche continue.

11. Scie à chaîne (1) de la revendication 10, dans laquelle le canal (51) se termine par sa deuxième extrémité au niveau d'un deuxième coin du symbole triangulaire, le deuxième coin formant au moins approximativement un angle droit, formant ainsi dans l'ensemble une flèche axialement divisée avec une extension longitudinale continue depuis la première extrémité du canal (51) à l'extrémité conique de la pointe de flèche (53).

12. Chaîne de scie (11) pour la scie à chaîne (1) selon l'une des revendications 1 à 11.
